# FASCICULE DE BREVET EUROPEEN

(11) **EP 0 636 826 B1**
(45) Date de publication et mention de la délivrance du brevet: **08.01.1997**
(21) Numéro de dépôt: 94401648.4
(22) Date de dépôt: 19.07.1994
(51) Int. Cl.: F16L 33/02, B65D 63/02

(54) **Collier de serrage**
Rohrschelle
Pipe clamp

(30) Priorité: 30.07.1993 FR 9309407
(43) Date de publication de la demande: 01.02.1995
(73) Titulaire: Etablissements CAILLAU, F-92130 Issy-les-Moulineaux (FR)
(72) Inventeur: Detable, Pascal, F-41130 Villedieu (FR); André, Michel, F-41200 Romorantin Lanthenay (FR)
(74) Mandataire: Descourtieux, Philippe

(56) Documents cités:
- EP-A- 0 079 252
- EP-A- 0 236 217
- EP-A- 0 344 050

## Description

La présente invention concerne un collier de serrage constitué par une bande métallique enroulée sur elle-même, présentant au voisinage de l'une de ses extrémités un double pli radial, dénommé "oreille", faisant saillie vers l'extérieur du collier et équipé d'un prolongement s'étendant sensiblement selon la périphérie du collier.

L'autre extrémité de la bande est pourvue d'un crochet susceptible d'être agrafé derrière l'oreille après serrage du collier.

Le prolongement présente une partie saillante dont la dimension transversale est inférieure à celle du bord libre du crochet et qui est éloignée de l'oreille dans le sens périphérique d'une distance au moins égale à l'épaisseur du bord libre du crochet. Cette partie fait radialement saillie vers l'extérieur du collier et est susceptible de coopérer avec des moyens de pré-accrochage à l'état non serré du collier.

Un tel collier est notamment connu par le brevet européen EP 0 079 252. Un avantage de ce collier réside en ce que, grâce aux moyens de pré-accrochage, il présente un diamètre avant serrage voisin de celui de l'objet à serrer, tout en lui étant légèrement supérieur. La mise en place de ce collier, puis son serrage, s'en trouvent facilités.

Dans certaines applications, l'opérateur peut avoir besoin, à partir de la position de pré-accrochage, d'ouvrir le collier pour le passer autour de l'objet à serrer. Une telle opération est relativement délicate avec les colliers connus.

De plus, pour certaines applications particulièrement exigeantes, il est important de garantir la tenue du collier en toutes circonstances.

Ainsi, bien que le collier du type précité soit d'un usage à la fois rapide et sûr, le maintien des assemblages mécaniques ou, le cas échéant, l'étanchéité d'un tuyau souple emmanché sur un tube rigide, doivent rester suffisants même si le collier est mal agrafé.

La présente invention se propose d'améliorer les colliers connus du type précité pour faciliter le passage de la position de pré-accrochage à la position ouverte, sans pour autant permettre que ce passage de l'une à l'autre position se fasse de manière intempestive.

Dans le même temps, l'invention vise à munir ces colliers connus d'une sécurité, en vue d'éviter les conséquences fâcheuses d'un mauvais agrafage.

A cet effet, selon l'invention, le bord libre du crochet présente une encoche dont la dimension transversale et la hauteur radiale permettent le passage de la partie saillante. L'encoche et la partie saillante sont décalées l'une par rapport à l'autre dans le sens transversal de la bande. Les moyens de pré-accrochage comprennent une portion du bord libre du crochet, dite "portion de pré-accrochage", susceptible d'être agrafée derrière la partie saillante, voisine de l'encoche et située dans l'alignement, selon la périphérie du collier, de ladite partie saillante.

Avantageusement, la dimension transversale de l'encoche est au moins égale à celle de la partie saillante, tandis que sa hauteur radiale est sensiblement égale à celle de ladite partie saillante.

Ainsi, la partie saillante peut facilement être engagée sous le crochet ou, dans un mouvement inverse, en être dégagée, sans qu'il soit nécessaire, à cette occasion, d'exercer une pression sur l'extrémité du collier munie de la partie saillante pour tenter de ramener cette dernière radialement vers l'intérieur du collier.

Le passage de l'une à l'autre des positions ouverte et de pré-accrochage du collier est ainsi facilité.

Dans la mesure où l'encoche et la partie saillante sont décalées transversalement, le passage de l'une à l'autre des positions de pré-accrochage et ouverte du collier nécessite le déplacement transversal d'une extrémité du collier par rapport à l'autre pour aligner l'encoche et la partie saillante.

Cette disposition permet d'éviter l'ouverture intempestive du collier à partir de sa position de pré-accrochage.

Par ailleurs, même si le crochet est mal agrafé derrière l'oreille, il est capable, notamment sous l'effet de l'élasticité du collier, de s'agrafer automatiquement entre l'oreille et la partie saillante par coopération de cette partie saillante et de la portion de pré-accrochage prévue sur le bord libre du crochet.

En d'autres termes, même après un desserrage partiel du collier, le crochet est au moins agrafé derrière la partie saillante.

Selon un premier mode de réalisation de l'invention, la partie saillante est avantageusement constituée par l'extrémité recourbée du prolongement.

La demande de brevet déposée par la Demanderesse sous le numéro 93 06045 concerne un collier de serrage, dont l'oreille est munie d'une butée qui fait corps avec elle et qui est susceptible de venir en contact avec la face interne du crochet lorsque celui-ci est en cours d'agrafage sur l'oreille, pour que la limite d'élasticité ne soit pas dépassée lors du serrage du collier. Selon ce premier mode de réalisation, la face externe de l'extrémité recourbée du prolongement fait avantageusement office d'une telle butée.

Si des exigences d'étanchéité sont liées à l'utilisation du collier, le prolongement forme de manière connue une semelle qui, à l'état serré du collier, s'étend au moins sous le crochet. Dans ce cas, la partie saillante est avantageusement constituée par une portion découpée dans la semelle et pliée par rapport à celle-ci.

D'autres caractéristiques et avantages de la présente invention apparaîtront mieux à la lecture de la description détaillée qui suit, de modes de réalisation indiqués à titre d'exemples. La description se réfère aux dessins annexés sur lesquels:
- la figure 1 est une vue partielle en perspective d'un collier conforme à l'invention, représenté en position ouverte,
- la figure 2 est une vue de dessus partielle du collier de la figure 1,
- la figure 3 est une vue partielle en élévation du collier de la figure 1 en position de serrage normal, le crochet étant agrafé derrière l'oreille,
- la figure 4 est une vue analogue à la figure 3, le crochet étant agrafé derrière la partie saillante du prolongement,
- la figure 5 est une vue partielle en élévation d'un collier conforme à l'invention selon une variante de réalisation, ce collier étant représenté en position de serrage normal,
- la figure 6 représente en perspective une partie du collier de la figure 5,
- la figure 7a est une vue selon la flèche F de la figure 5, montrant l'extrémité du collier pourvue du crochet,
- la figure 7b est une vue selon la flèche G de la figure 5, montrant l'extrémité du collier munie de l'oreille.

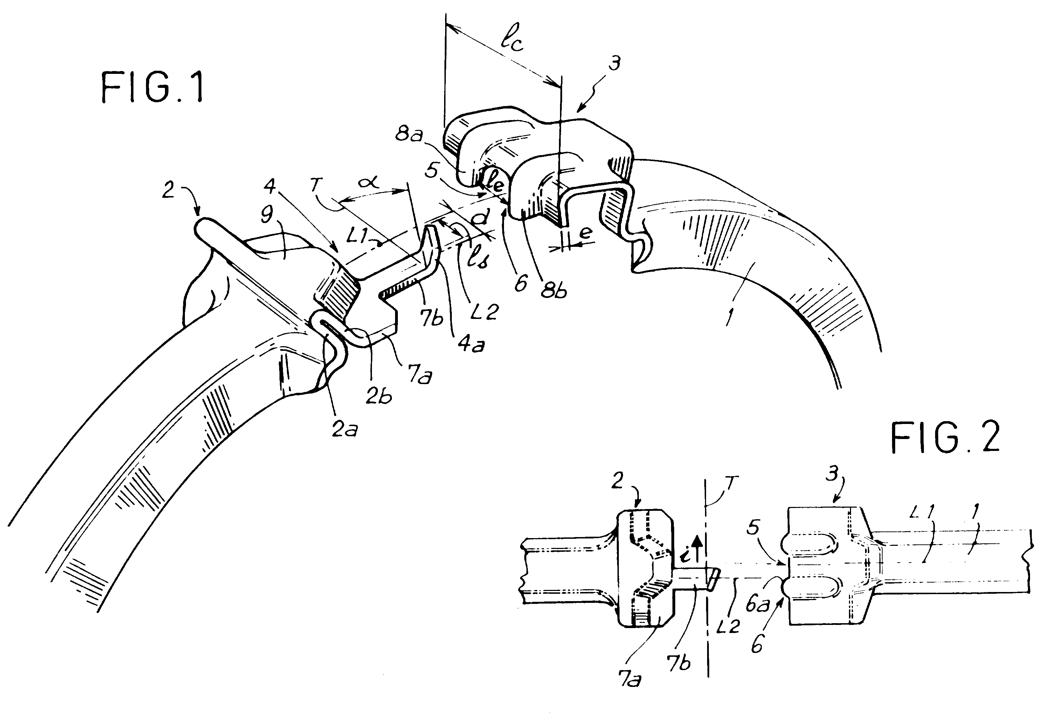

Les figures 1 à 4 représentent un collier de serrage du type précité, constitué par une bande métallique 1 enroulée sur elle-même. Cette bande présente, au voisinage de l'une de ses extrémités, une oreille 2 formée par deux plis radiaux complémentaires 2a et 2b faisant radialement saillie sur la périphérie extérieure du collier. De préférence, et comme représenté sur les figures, cette oreille 2 est légèrement inclinée dans le sens opposé au serrage.

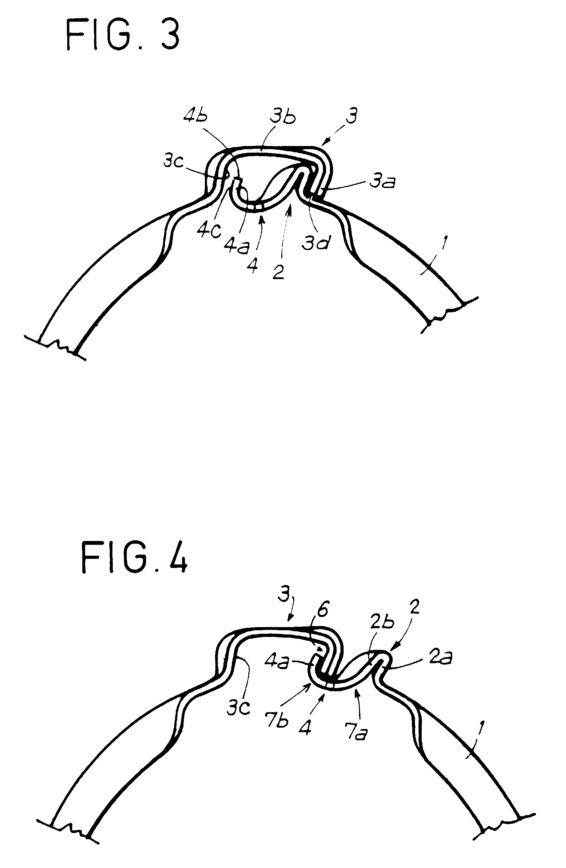

L'autre extrémité de la bande métallique 1 est pourvue d'un crochet 3 qui, comme on le constate sur la figure 3, est susceptible d'être agrafé derrière l'oreille après serrage du collier.

L'oreille 2 est équipée d'un prolongement 4 s'étendant sensiblement selon la périphérie du collier et dont une partie 4a fait radialement saillie vers l'extérieur du collier.

La dimension transversale ***l***_{***s***} de cette partie saillante 4a est inférieure à la dimension transversale ***l***_{***c***} du bord libre 3a du crochet 3.

Ce bord libre 3a présente une encoche 5 adaptée au passage de la partie saillante 4a. La dimension transversale ***l***_{***e***} de l'encoche 5 est en effet au moins égale à la dimension transversale lₛ de la partie saillante 4a, tandis que les hauteurs radiales de ces deux éléments sont du même ordre.

L'encoche 5 et la partie saillante 4a sont décalées l'une par rapport à l'autre dans le sens transversal de la bande.

Pour illustrer ce décalage sur la figure 1, on schématisé en traits interrompus mixtes la ligne médiane L₁ de l'encoche dirigée selon la périphérie du collier et située, dans l'exemple représenté, sur l'axe longitudinal de ce dernier, ainsi que la ligne médiane L₂ de la partie saillante. Ces deux lignes sont écartées de la distance d.

En position de pré-accrochage illustrée par la figure 4, la partie saillante 4a coopère avec une portion 6 du bord libre 3a du crochet 3.

Comme on le voit mieux sur la figure 2, cette portion 6 de pré-accrochage est située dans l'alignement de la partie saillante 4a, c'est-à-dire sur la ligne L₂.

De manière avantageuse, le collier comporte des moyens d'alignement des positions transversales de l'encoche 5 et de la partie saillante 4a, susceptibles d'être mis en oeuvre lors du rapprochement, à partir de la position ouverte illustrée par la figure 1, des deux extrémités de la bande.

Ces moyens sont visibles sur la figure 2, qui montre que la portion de pré-accrochage 6 est munie d'une rampe 6a prévue sur la face externe du bord libre 3a du crochet.

Cette rampe 6a est inclinée vers l'intérieur du crochet par rapport à un axe T transversal à la bande 1 et s'étend au voisinage de l'encoche 5.

En fait, dans l'exemple représenté, la portion 6 de pré-accrochage est constituée par une portion du bord libre 3a du crochet, adjacente à un bord radial de l'encoche 5.

De manière connue en soi, deux renflements 8a et 8b sont réalisés sur le crochet de part et d'autre de l'encoche. Ces renflements sont destinés, lors de l'agrafage du crochet derrière l'oreille 2, à coopérer avec un renflement central 9, adjacent au pli 2b de l'oreille, pour guider le mouvement relatif de cette oreille 2 et du crochet 3.

La rampe 6a est alors constituée par celle des faces du renflement 8b qui se trouve être adjacente à l'encoche 5.

Pour augmenter l'efficacité de cette rampe 6a, la partie saillante 4a fait un angle α par rapport à l'axe T et présente donc une inclinaison sensiblement parallèle à la rampe.

Grâce à cette conception, lors du rapprochement des deux extrémités de la bande conduisant à la position de pré-accrochage, la rampe 6a et la partie saillante 4a coopèrent l'une avec l'autre. Il en résulte un léger déplacement de la partie saillante par rapport au crochet dans le sens de la flèche ***i***, qui fait coïncider les lignes L₁ et L₂ en annulant le décalage d.

Dès que la partie saillante 4a échappe à la rampe 6, c'est-à-dire dès qu'elle se trouve sous le crochet, l'élasticité du collier rétablit le décalage d, ce qui permet l'agrafage de la portion 6a derrière la partie saillante 4a.

Pour ouvrir le collier à partir de cette position de pré-accrochage, il suffira, par une manoeuvre simple, de déplacer l'un par rapport à l'autre la partie saillante 4a et le crochet 3, de manière à faire à nouveau coïncider les lignes L₁ et L₂, pour que la partie saillante échappe à la portion 6a de pré-accrochage et passe dans l'encoche 5.

Comme le montrent les figures, le bord terminal libre 4b de cette partie saillante 4a est éloigné de l'oreille 2, dans le sens périphérique, d'une distance au moins égale à l'épaisseur du bord libre 3a du crochet 3.

De manière à permettre l'agrafage du crochet 3 sur l'oreille 2, cette distance est toutefois inférieure à la longueur de la partie centrale 3b du crochet sensiblement parallèle à la périphérie du collier. Ainsi, à l'état serré du collier, la partie 4a saillante est tout au plus située contre la face interne 3c du crochet 3.

Lorsque le renflement central 9 est présent, c'est de préférence la distance entre la partie saillante 4a et ce renflement 9 qui est au moins égale à l'épaisseur du bord libre 3a du crochet 3.

Cette configuration dote le collier de serrage selon l'invention d'une double sécurité puisque, au cas où l'agrafage de la figure 3 serait défaillant, le bord libre 3a serait susceptible, grâce à l'élasticité propre du crochet 3, de venir s'insérer entre l'oreille 2 et la partie saillante 4a pour revenir à la position de pré-accrochage de la figure 4.

En effet, si par suite d'un mauvais agrafage, le bord libre 3a du crochet 3 échappait à l'oreille 2, il serait naturellement retenu par la partie saillante 4a et, cette dernière étant suffisamment éloignée de l'oreille 2, le crochet viendrait s'agrafer sur elle.

Pour permettre le pré-accrochage, la hauteur radiale de l'extrémité 4b de la partie saillante 4a doit évidemment être supérieure à la hauteur radiale de l'extrémité 3d du bord libre 3a du crochet 3.

Sur les dessins, la hauteur radiale de cette extrémité 4b est inférieure à celle de l'oreille 2 ; elle peut cependant être sensiblement égale à cette dernière.

De toute façon, la hauteur radiale de l'extrémité 4b est limitée par la position radiale de la face interne de la partie centrale 3b du crochet 3.

Sur les figures 1 et 4, on voit que la partie saillante 4a est avantageusement constituée par l'extrémité recourbée du prolongement 4.

La face externe 4c de cette extrémité recourbée peut faire office de butée et éviter tout dépassement de la limite d'élasticité du collier lors du serrage.

On constate, au vu des figures 1 et 2, que le prolongement 4 du collier représenté sur ces figures comporte un premier tronçon 7a, adjacent à l'oreille 2 et de dimension transversale sensiblement égale à celle de cette dernière, et un deuxième tronçon 7b dont l'extrémité libre est munie de la partie saillante 4a.

La dimension transversale de ce deuxième tronçon 7b est sensiblement égale à la largeur ***l***_{***s***} de la partie saillante 4a et inférieure à celle du premier tronçon 7a.

Cette disposition facilite le passage de la partie saillante dans l'encoche 5.

En fait, le premier tronçon 7a est muni du renflement 9 et de la longueur du deuxième tronçon 7b est au moins égale à l'épaisseur ***e*** du bord libre du crochet.

Dans l'exemple illustré par les figures 1 à 4, le collier de serrage présente dans sa partie courante une section en U, adaptée plus particulièrement à l'assemblage de deux tubes dont les extrémités sont évasées et peuvent s'encastrer entre les branches du U de la section du collier.

La réalisation précédemment décrite est également applicable à un collier du type décrit dans le brevet européen précité, formé par une bande plate.

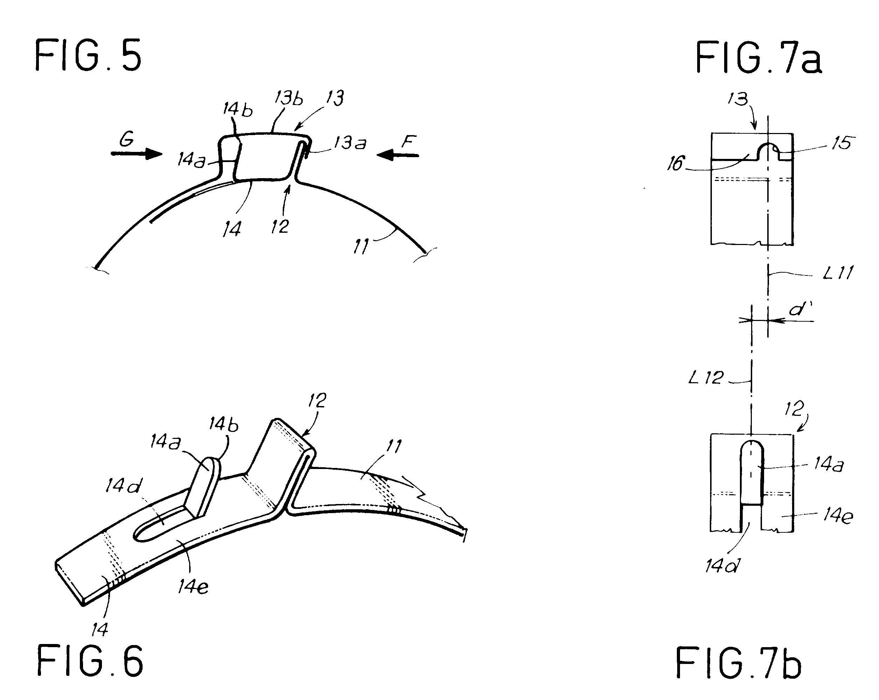

Les figures 5, 6, 7a et 7b illustrent une variante de réalisation de l'invention pour des colliers dont l'utilisation est liée à des exigences d'étanchéité.

Sur ces figures, les éléments déjà décrits et représentés sur les figures 1 et 2, sont désignés par les mêmes références augmentées de 10 ; il apparaît donc inutile de les décrire à nouveau.

Comme il a été précédemment indiqué, l'oreille 12 est équipée d'un prolongement 14 qui s'étend sensiblement selon la périphérie du collier. Pour assurer l'étanchéité, ce prolongement 14 forme une semelle qui, à l'état serré du collier, s'étend au moins sous le crochet 13. Ceci signifie que la distance de l'oreille 12 à l'extrémité libre de la semelle 14 est au moins égale, et avantageusement légèrement supérieure à la longueur de la partie centrale 13b du crochet 13. Cette semelle permet au collier d'exercer son serrage de manière continue sur toute la périphérie de l'objet à serrer.

Dans cette variante, la partie saillante 14a est constituée par une portion découpée dans la partie médiane de la semelle 14 et redressée radialement par rapport à elle. Finalement, la partie 14a peut être légèrement inclinée dans le sens opposé au serrage, éventuellement davantage que l'oreille 12.

Comme on le constate sur la figure 6, dans la mesure où la découpe 14d pour la formation de la partie saillante 14a est réalisée dans la partie médiane de la semelle 14, les bords 14e de cette découpe assurent la continuité du contact de la semelle sur l'objet à serrer et permettent par conséquent de ne pas rompre l'étanchéité du collier.

Sur les figures 7a et 7b, qui sont alignées verticalement, on constate que c'est cette fois la ligne médiane L₁₂ de la partie saillante 14a qui correspond à l'axe longitudinal de la bande tandis que la ligne médiane L₁₁ de l'encoche 15 est décalée transversalement d'une distance d'.

La portion de pré-accrochage 16 est constituée par la partie du bord libre 13a du crochet 13 qui se trouve sur la ligne médiane L_{12.}

## Revendications

1. Collier de serrage constitué par une bande métallique (1; 11) enroulée sur elle-même, présentant au voisinage de l'une de ses extrémités un double pli radial (2; 12), dénommé oreille, faisant saillie vers l'extérieur du collier et équipé d'un prolongement (4; 14) s'étendant sensiblement selon la périphérie du collier, l'autre extrémité de ladite bande étant pourvue d'un crochet (3; 13) susceptible d'être agrafé derrière l'oreille (2; 12) après serrage du collier, le prolongement (4; 14) présentant une partie saillante (4a; 14a) dont la dimension transversale est inférieure à celle du bord libre (3a; 13a) du crochet et qui est éloignée de l'oreille (2; 12) dans le sens périphérique d'une distance au moins égale à l'épaisseur du bord libre (3a; 13a) du crochet (3; 13), ladite partie (4a; 14a) faisant radialement saillie vers l'extérieur du collier et étant susceptible de coopérer avec des moyens de pré-accrochage à l'état non serré du collier, caractérisé :
- en ce que le bord libre (3a; 13a) du crochet (3; 13) présente une encoche (5; 15) dont la dimension transversale et la hauteur radiale permettent le passage de la partie saillante (4a; 14a),
- en ce que ladite encoche et ladite partie saillante sont décalées (d; d') l'une par rapport à l'autre dans le sens transversal de la bande (1; 11),
- et en ce que les moyens de pré-accrochage comprennent une portion (6; 16) du bord libre (3a; 13a) du crochet (3; 13), dite portion de pré-accrochage, susceptible d'être agrafée derrière la partie saillante (4a; 14a) voisine de l'encoche (5; 15) et située dans l'alignement, selon la périphérie du collier, de ladite partie saillante.

2. Collier selon la revendication 1, caractérisé en ce qu'il comporte des moyens (4a, 6a) d'alignement des positions transversales de l'encoche (5) et de la partie saillante (4a), susceptibles d'être mis en oeuvre lors du rapprochement des deux extrémités de la bande (1).

3. Crochet selon la revendication 2, caractérisé en ce que la portion de pré-accrochage (6) est munie d'une rampe (6a), inclinée vers l'intérieur du crochet (3) par rapport à un axe transversal à la bande (1) et s'étendant au moins au voisinage de l'encoche (5), et en ce que la partie saillante (4a) présente une inclinaison (α) sensiblement parallèle à celle de ladite rampe.

4. Collier selon l'une quelconque des revendications 1 à 3, caractérisé en ce que la partie saillante (4a) est constituée par l'extrémité recourbée du prolongement (4).

5. Collier selon la revendication 4, caractérisé en ce que le prolongement (4) comporte un premier tronçon (7a) adjacent à l'oreille (2), de dimension transversale sensiblement égale à celle de ladite oreille, et un deuxième tronçon (7b), dont l'extrémité libre est munie de la partie saillante (4a), les dimensions transversales de ce deuxième tronçon et de la partie saillante étant sensiblement égales entre elles et inférieures à celle du premier tronçon.

6. Collier selon l'une quelconque des revendications 1 à 3, caractérisé en ce que, le prolongement (14) formant semelle et s'étendant, à l'état serré du collier, au moins sous le crochet (13), la partie saillante (14a) est constituée par une portion découpée dans ladite semelle (14) et redressée radialement par rapport à cette dernière.

## Patentansprüche

1. Klemmschelle, gebildet durch ein aufgerolltes Metallband (1; 11), welches nahe einem seiner Enden eine radiale, an der Außenseite der Schelle abstehende Doppelfaltung (2; 12), genannt "Ansatz", aufweist, die mit einer sich im wesentlichen in Umfangsrichtung der Schelle erstreckenden Verlängerung (4; 14) ausgestattet ist, wobei das andere Ende des Bandes mit einem nach Festziehen der Schelle hinter dem Ansatz (2; 12) einhakbaren Haken (3; 13) versehen ist und wobei die Verlängerung (4; 14) einen abstehenden Teil (4a; 14a) aufweist, dessen Abmessung in Querrichtung kleiner ist als die des freien Endes (3a; 13a) des Hakens und der sich in Umfangsrichtung in einem Abstand vom Ansatz (2; 12) befindet, der mindestens gleich ist der Dicke des freien Endes (3a; 13a) des Hakens (3;13), welcher Teil (4a; 14a) radial in Richtung der Außenseite des Bandes absteht und im nicht festgezogenen Zustand der Schelle mit Vorverhakungsmitteln zusammenwirken kann, dadurch gekennzeichnet,
- daß das freie Ende (3a; 13a) des Hakens (3; 13) eine Ausnehmung (5; 15) aufweist, deren Abmessung in Querrichtung und deren radiale Höhe den Durchtritt des abstehenden Teils (4a; 14a) gestatten,
- daß die Ausnehmung und der abstehende Teil in Querrichtung des Bandes (1; 11) gegeneinander versetzt (d; d') sind
- und daß die Vorverhakungsmittel einen Teil (6; 16) des freien Endes (3a; 13a) des Hakens (3; 13), Vorverhakungsteil genannt, umfassen, der hinter dem abstehenden Teil (4a; 14a) einhakbar ist, sich in der Nähe der Ausnehmung (5; 15) befindet und mit dem abstehenden Teil in Umfangsrichtung der Schelle fluchtet.

2. Klemmschelle nach Anspruch 1, dadurch gekennzeichnet, daß sie Mittel (4a, 6a) zur Ausrichtung der transversalen Positionen der Ausnehmung (5) und des abstehenden Teils (4a) umfaßt, welche während der Annäherung der beiden Enden des Bandes (1) zum Einsatz bringbar sind.

3. Klemmschelle nach Anspruch 2, dadurch gekennzeichnet, daß der Vorverhakungsteil (6) mit einer zum Inneren des Hakens (3) um die Querachse des Bandes (1) geneigten, zumindest in der Nähe der Ausnehmung (5) sich erstreckenden Rampe (6a) versehen ist und daß der abstehende Teil (4a) eine zu dieser Rampe im wesentlichen parallele Neigung (α) aufweist.

4. Klemmschelle nach einem der Ansprüche 1 bis 3, dadurch gekennzeichnet, daß der abstehende Teil (4a) durch das umgebogene Ende der Verlängerung (4) gebildet ist.

5. Klemmschelle nach Anspruch 4, dadurch gekennzeichnet, daß die Verlängerung (4) einen dem Ansatz (2) benachbarten ersten Abschnitt (7a), dessen Querabmessung im wesentlichen gleich ist jener des Ansatzes, und einen zweiten Abschnitt (7b) umfaßt, dessen freies Ende mit dem abstehenden Teil (4a) versehen ist, wobei die Ouerabmessungen des zweiten Abschnitts und des abstehenden Teils im wesentlichen untereinander gleich und kleiner sind als jene des ersten Abschnitts.

6. Klemmschelle nach einem der Ansprüche 1 bis 3, dadurch gekennzeichnet, daß die Verlängerung (14) im klemmverbundenen Zustand der Klemmschelle eine sich zumindest unterhalb des Hakens (13) erstreckende Unterlage bildet und der abstehende Teil (14a) durch einen in dieser Unterlage (14) ausgeschnittenen und radial zu dieser aufgebogenen Abschnitt gebildet ist.

## Claims

1. A clamp fitting constituted by a metal band (1; 11) wound on itself, presenting near one of its ends a double radial fold (2; 12), called ear, projecting outwardly of the clamp and equipped with an extension (4; 14) extending substantially along the periphery of the clamp, the other end of said band being provided with a hook (3; 13) capable of being hooked behind the ear (2; 12) after the clamp is tightened, the extension (4; 14) presenting a projecting part (4a; 14a) of which the transverse dimension is less than that of the free edge (3a; 13a) of the hook and which projecting part is spaced apart from the ear (2; 12) in the peripheral sense by a distance at least equal to the thickness of the free edge (3a; 13a) of the hook (3; 13), said part (4a; 14a) projecting radially towards the outside of the clamp and being capable of cooperating with pre-hooking means when the clamp is in non-tightened state, characterized:
- in that the free edge (3a; 13a) of the hook (3; 13) presents a notch (5; 15) whose transverse dimension and radial height allow the projecting part (4a; 14a) through,
- in that said notch and said projecting part are offset (d; d') with respect to one another in the transverse sense of the band (1; 11),
- and in that the pre-hooking means comprise a portion (6; 16) of the free edge (3a; 13a) of the hook (3; 13), called pre-hooking portion, capable of being hooked behind the projecting part (4a; 14a), close to the notch (5; 15) and located in line, along the periphery of the clamp, with said projecting part.

2. The clamp according to claim 1, characterized in that it comprises means (4a, 6a) for aligning the transverse positions of the notch (5) and of the projecting part (4a), capable of being employed when the two ends of the band (1) are being brought together.

3. A hook according to claim 2, characterized in that the pre-hooking portion (6) is provided with a ramp (6a), inclined towards the inside of the hook (3) with respect to an axis transverse to the band (1) and extending at least in the vicinity of the notch (5), and in that the projecting part (4a) presents an inclination (α) substantially parallel to that of said ramp.

4. The clamp according to any one of claims 1 to 3, characterized in that the projecting part (4a) is constituted by the curved end of the extension (4).

5. The clamp according to claim 4, characterized in that the extension (4) comprises a first section (7a) adjacent to the ear (2), of transverse dimension substantially equal to that of said ear, and a second section (7b) whose free end is provided with the projecting part (4a), the transverse dimensions of this second section and of the projecting part being substantially equal to one another and less than that of the first section.

6. The clamp according to any one of claims 1 to 3, characterized in that the extension (14) forming sole and extending, when the clamp is in tightened state, at least beneath the hook (13), the projecting part (14a) is constituted by a portion cut out in said sole (14) and radially straightened up with respect thereto.
